Europäisches Patentamt

European Patent Office

Office européen des brevets

(11) Publication number: **0 514 965 A2**

# EUROPEAN PATENT APPLICATION

(21) Application number: **92201276.0**

(22) Date of filing: **06.05.92**

(51) Int. Cl.5: **G11B 17/04**, G11B 17/035

(30) Priority: **15.05.91 AT 1005/91**

(43) Date of publication of application:
**25.11.92 Bulletin 92/48**

(84) Designated Contracting States:
**AT DE FR GB**

(71) Applicant: **N.V. Philips' Gloeilampenfabrieken**
**Groenewoudseweg 1**
**NL-5621 BA Eindhoven(NL)**

(72) Inventor: **Drahovzal, Otto**
**c/o INT. OCTROOIBUREAU B.V., Prof.**
**Holstlaan 6**
**NL-5656 AA Eindhoven(NL)**
Inventor: **Hack, Gottfried**
**c/o INT. OCTROOIBUREAU B.V., Prof.**
**Holstlaan 6**
**NL-5656 AA Eindhoven(NL)**
Inventor: **Hoffmann, Erich**
**c/o INT. OCTROOIBUREAU B.V., Prof.**
**Holstlaan 6**
**NL-5656 AA Eindhoven(NL)**

(74) Representative: **Schrijnemaekers, Hubert**
**Joannes Maria et al**
**Internationaal Octrooibureau B.V. Prof.**
**Holstlaan 6**
**NL-5656 AA Eindhoven(NL)**

(54) **Apparatus for the reproduction of recordings made on a record carrier.**

(57) In an apparatus (1) comprising a chassis (7), a holder device (29) for a record carrier (2), a closing device (18) which is movably guided by a guiding device (18) and which serves for closing an opening (6) in the upper wall (4) of the apparatus (1), and at least one actuating device (42, 43) which is movably connected to the chassis (7) and which acts both upon the closing device (18) and upon the holder device (29) to obtain a relative movement of the holder device (29) and the closing device (18) with respect to each other during a movement of these two devices, the holder device (29) is guided by means of a further guiding device (44) along an L-shaped path of movement (57) comprising a horizontal path section (58) and a vertical path section (59), and each actuating device (42, 43) comprises a sliding member (100, 101) which is guided so as to be movable parallel to the vertical path section (59) and a toothed wheel (112, 113) which is rotatably supported on the sliding member (100, 101) and which is in mesh with a horizontal toothed portion (118, 119) on the holder device (29) and with a horizontal toothed portion (120, 121) on the closing device (18).

EP 0 514 965 A2

FIG.1

The invention relates to an apparatus for the reproduction of recordings made on a record carrier, which apparatus comprises a housing having a upper wall and an opening in the upper wall, through which opening the record carrier can be inserted into the apparatus and removed from the apparatus, a chassis accommodated in the housing, a closing device which is movable between an open position and a closed position and which comprises a cover for closing the opening, a holder device which is movable between a loading position and an operating position and which comprises a support for the record carrier, which support extends parallel to the cover, which holder device is connected to the closing device *via* a guiding device which guides the holder device and the closing device so as to be movable relative to one another in a direction of movement parallel to the cover and the support, and at least one actuating device which is movably connected to the chassis and which acts both upon the closing device and upon the holder device to control the closing device and the holder device during a movement of said two devices so as to obtain a relative movement of said devices with respect to one another parallel to the direction of movement, said control by the control device on the one hand simultaneously causing the closing device to assume its open position and the holder device to assume its loading position, enabling the record carrier to be inserted into the holder device, and on the other hand simultaneously causing the closing device to assume its closed position and the holder device to assume its operating position in which the record carrier is in an operating position.

Such an apparatus of the type defined in the opening paragraph is known, for example, from US-PS 4,498,161. This known apparatus is an apparatus for the reproduction of optoelectrically reproducible recordings made on a disc-shaped round record carrier, which apparatus is generally referred to as a CD-player. The known apparatus comprises a closing device which is pivotably connected to the chassis *via* a pivot and which has a plate-shaped cover on which a tray-like holder device for a record carrier is guided so as to be movable in direction of movement perpendicular to the pivotal axis of the closing device and parallel to the plate-shaped cover of the closing device. The bottom of the tray-like holder device, which bottom extends parallel to the cover of the closing device, serves a support for supporting the record carrier. In the known apparatus the actuating device comprises an arm which is pivotally connected to the chassis and to the tray-like holder device and which comprises a projection which cooperates with a tension spring whose other end cooperates with a lever which forms part of the closing device.

In the known apparatus, as a result of the pivotal mounting of the closing device, the holder device together with the closing device occupies a position which is inclined relative to the apparatus, *i.e.* the upper wall of the apparatus, when the closing device is in its open position and the holder device is consequently in its loading position. As a result of this inclined position the holder device must have provisions to ensure that after its insertion into the holder device a record carrier remains in a desired position on the bottom of the tray-like holder device. Owing to the pivotal mounting of the closing device it is also necessary that a comparatively large clearance is available above the apparatus in order to guarantee a correct opening of the closing device and an unobstructed and easy insertion of a record carrier into the holder device, which is connected to the closing device. As a result of the construction of the actuating device in the known apparatus this device only enables a comparatively small stroke to be obtained with respect to the relative movement between the closing device and the holder device, so that only a comparatively small part of the tray-like holder device is freely accessible for the insertion of a record carrier when the closing device is in its open position and the holder device is in its loading position at the same time. On account of this limited accessibility the disc-shaped record carrier must be inserted into the holder device parallel to the main surfaces of this device, so that there is a comparatively large risk of damage to the recording surface of the record carrier. Moreover, to insert a disc-shaped record carrier onto the holder device this makes it necessary that at both main surfaces the record carrier is touched with a finger, *i.e.* with the thumb and preferably the forefinger, which may lead to undesirable damaging of the record carrier and undesirable deposits on the record carrier, which is particularly undesirable if these disturbances occur at the main surface on which the recordings are stored. The construction of the actuating device of the known apparatus is also unfavourable for a simple assembly because mounting of the tension spring for this actuating device is comparatively time-consuming and in practice can be automated only with great difficulty and is therefore nearly always effected by hand.

It is the object of the invention to mitigate the above problems and to improve an apparatus of the type defined in the opening paragraph in such a manner that only a comparatively small clearance is needed above the apparatus, that the actuating device provides a large range of movement between the closing device and the holder device, thereby enabling a record carrier to be inserted into the holder device easily and without any obstruction, that insertion of the record carrier into the holder device does not give rise to damaging of the record carrier, that after insertion of a record carrier into the holder device the record carrier remains in its position in the holder device substantially without any separate means, and that the actuating device is of simple construction and can also be assembled simply and in an automated manner. In accordance with the invention this object can be achieved in that between the chassis and the holder device there is provided a further guiding device by which the holder device is guided along a substantially L-shaped path of movement comprising a first path section, which extends substantially parallel to the cover and substantially parallel to the direction of movement defined by the guiding device arranged between the closing device and the holder device, and a second path section, which extends substantially perpendicularly to said direction of movement and substantially perpendicularly to the cover, and in that the actuating device comprises a sliding member which is guided on the chassis so as to be movable parallel to the second path section and a toothed wheel which is rotatably supported on the sliding member and which is in mesh with a toothed portion provided on the holder device and extending parallel to the first path section and with a toothed portion provided on the closing device and extending parallel to the first path section. By providing a movement of the holder device along a substantially L-shaped path it is achieved that also in the open position and the loading position the closing device and the holder device occupy a position parallel to the upper wall of the apparatus, so that above the apparatus a comparatively small clearance for the closing device and the holder device is adequate. Moreover, it is thus achieved that the holder device and hence a record carrier inserted into the holder device nearly always remain in a position substantially parallel to the upper wall of the apparatus, so that the holder device does require substantially no separate means for positioning the record carrier in always the same relative position in the holder device when it is brought into its operating position. The actuating device provided has the advantage of a large range for the relative movement between the closing device and the holder device, so that it is achieved that the compartment provided in the holder device for receiving the record carrier is almost wholly exposed and is not covered by the closing device when the holder device is in its loading position, so that the record carrier can be inserted into the holder device from the top substantially unobstructed and in a convenient and safe manner. In the case that the apparatus in accordance with the invention is constructed for the reproduction of recordings made on a round disc-shaped record carrier having a central centring hole the advantage is obtained that for insertion into the holder device of the apparatus this record carrier can be held with the thumb and another finger between the centring hole and the outer edge of the record carrier, so that the main surfaces of such a record carrier need not be touched during loading. As such a round disc-shaped record carrier can be inserted directly from the top into the holder device of the apparatus there is no risk of scratching or similar damage of the record carrier at the location of its main surfaces. Another advantage of the present actuating device is that it can be of very simple construction with only a very small number of parts and can be assembled simply and, if desired, in an automated way.

For the construction of the further guiding device for the holder device and the actuation of the holder device there are several possibilities. However, in this respect it is found to be particularly advantageous if the holder device comprises two side wall portions which extend perpendicularly to its support and which each have a substantially L-shaped peripheral toothed section comprising a first toothed portion parallel to the first path section and a second toothed portion parallel to the second path section and being in mesh with a toothed drive wheel of a drive system for the holder device, which drive system is arranged at least partly on the chassis, the two toothed drive wheels being rotationally interlocked *via* a shaft which is rotatably supported on the chassis, and the further guiding device comprises two guide pins which project laterally from the two side wall portions of the holder device and which are spaced apart in the direction of movement defined by the guiding device provided between the closing device and the holder device, each of said guide pins engaging a substantially L-shaped guide slot formed in a chassis part which extend parallel to the two side wall portions of the holder device, and an additional actuating device cooperates with each of the two guide pins which are remote from the second toothed portions, by means of which additional actuating device the relevant guide pin is movable parallel to the second path section. Apart from a very good guidance of the holder device this also yields a very reliable displacement of the holder device because the holder device is moved not only *via* the two toothed drive wheels which each cooperate with a toothed portion but also by means of the two additional actuating devices which ensure a correct displacement of the holder device at its location which is remote from the toothed drive wheels.

The additional actuating devices may comprise slides which are guided to be movable in the direction of the first path section on the chassis parts parallel to the two side wall portions of the holder device and which at both ends each have a surface which is inclined relative to the direction of movement, one inclined surface cooperating with the guide pin nearest the second toothed portion and the other inclined surface cooperating with the guide pin which is remote of the second toothed portion. However, it is found to be particularly advantageous if each additional actuating device comprises a control disc, which disc is mounted on the shaft carrying the two toothed drive wheels and has a endless control groove at the location of its radial surface, and an actuating lever which is pivotally supported on the chassis and at a end which extends into the area of the control disc comprises a laterally projecting control pin engaging the control groove of the control disc and at an end which extends into the area of the guide pin which is remote from the second toothed portion has a coupling slot which extends substantially transversely of the second path section and cooperates with the guide pin in order to move. Such additional actuating devices do not require much space and have the advantage that they give rise to only very small frictional losses, resulting in a comparatively smooth actuation of the holder device.

In this respect it is found to be particularly advantageous if the coupling slot is open at the side facing the second toothed portion, and the guide pins which cooperates with the coupling slot is disengaged from the coupling slot when the holder device is moved along the first path section of the L-shaped path of movement. This has the advantage that the additional actuating devices are active only during the movement of the holder device parallel to the second path section and the actuating devices can consequently be of very simple construction.

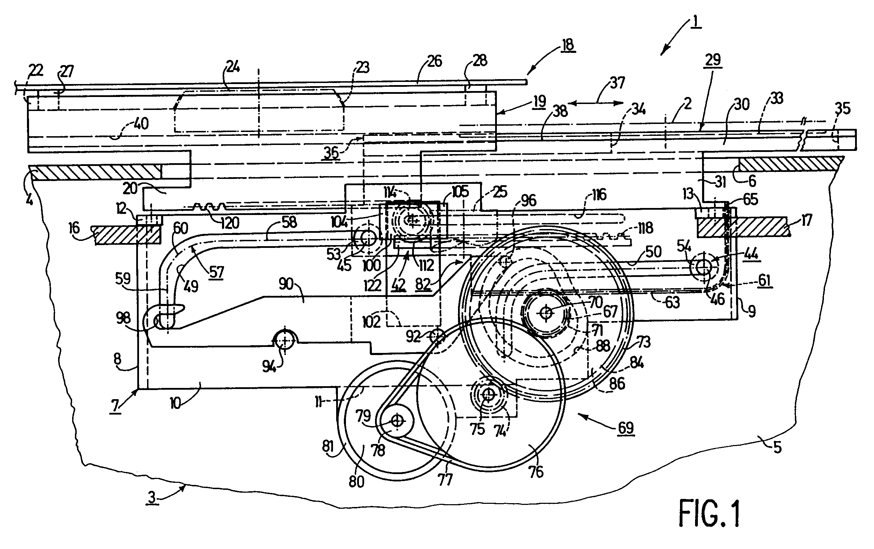

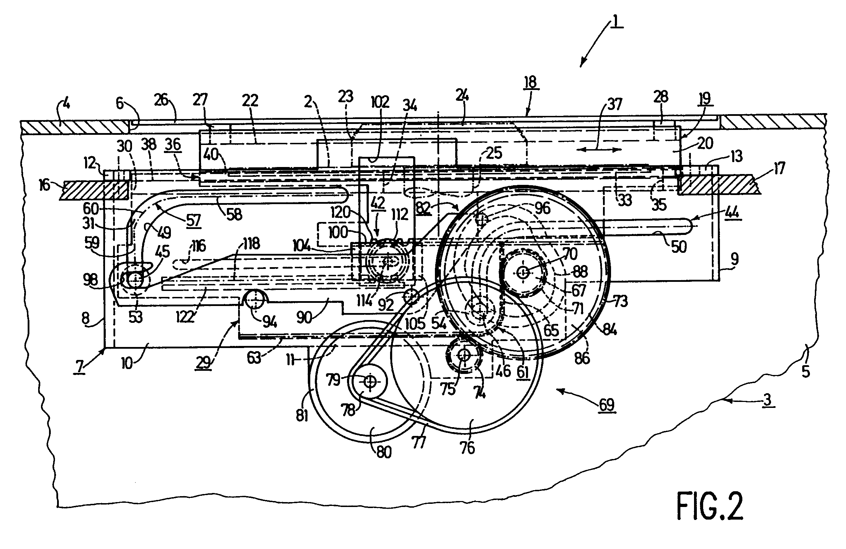

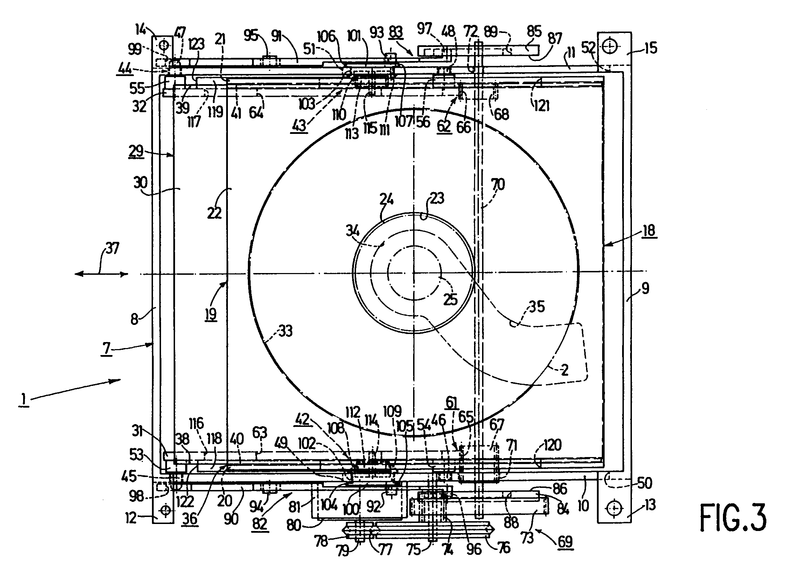

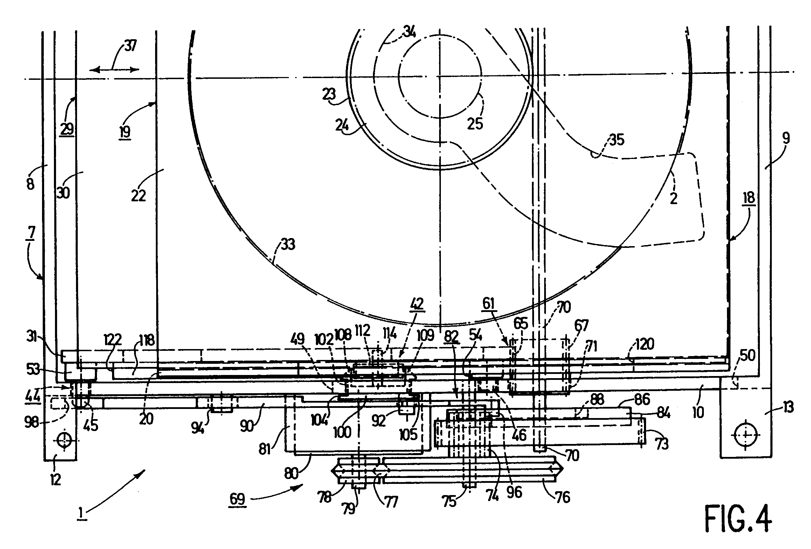

The invention will now be described in more detail on the basis of an exemplary embodiment which is shown in the drawings and to which the invention is not limited. Figure 1 is a full-size side view showing a part of an apparatus, with partly cut-away housing, for the reproduction of recordings made on a round disc-shaped record carrier, which apparatus comprises a movable closing device for closing a opening in the upper wall of the apparatus housing and a movable holder device for receiving the record carrier, the closing device being shown in its open position and the holder device in its loading position. Figure 2, in the same way as Fig. 1, shows that part of the apparatus shown in Fig. 1, the closing device being shown in its closed position and the holder device in its operating position. Figure 3 shows the part of the apparatus shown in Figs. 1 and 2 to a reduced scale in comparison with the full-size view in Figs. 1 and 2, the apparatus housing and a cover of the closing device not being shown. Figure 4 shows a part of the apparatus part shown in Fig. 3 to a larger scale than Fig. 3.

Figs. 1 to 4 show a part of an apparatus 1 constructed to reproduce recordings made on a disc-shaped round record carrier 2. In Figs. 1 to 4 the record carrier 2 is represented diagrammatically as a dash-dot line.

The apparatus 1 comprises a housing 3, of which an upper wall 4 and a side wall 5 are shown in Figs. 1 and 2. The upper wall 4 has a opening 6 of rectangular cross-section through which the record carrier 2 can be inserted into the apparatus 1 and removed from the apparatus 1.

The apparatus 1 has a chassis 7 accommodated in the housing 3. The chassis 7 is frame-shaped and basically comprises a rear wall 8, a front wall 9, a first side wall 10 and a second side wall 11. The four walls 8, 9, 10 and 11 are integrally connected to one another and each extend perpendicularly to the upper wall 4 of the housing 3. In its corner areas which face the upper wall 4 the chassis 7 carries laterally projecting mounting lugs 12, 13, 14 and 15 by means of which the chassis 7 is positioned on mounting limbs 16 and 17 provided at the housing side, to which limbs the mounting lugs 12, 13, 14 and 15 are secured by means of screw connections, not shown.

For closing the opening 6 in the upper wall 4 of the housing 3 the apparatus 1 comprises a closing device 18 which is movable between an open position shown in Fig. 1 and a closed position shown in Fig. 2. The closing device 18 comprises a substantially U-shaped main part 19 comprising two flange portions 20 and 21, which extend perpendicularly to the upper wall 4, and a bridge portion 22, which extends parallel to the upper wall 4 and which interconnects the two flange portions 20 and 21. The bridge portion 22 has a central opening 23 in which a pressure device 24, which is represented only diagrammatically as a dash-dot line in Figs. 1 to 4, is arranged and secured in a manner not shown, which device serves for pressing a record carrier 2, brought to a operating position in the apparatus, as described hereinafter, against a rotatable turntable 25 for the record carrier 2. In Figs. 1 to 4 the turntable 25 is shown only diagrammatically as a dash-dot line.

The closing device 18 further comprises a plate-shaped cover 26, which extends parallel to the upper wall 4, to close the opening 6 in the upper wall 4. The cover 26 has projections 27 and 28 connecting the cover 26 to the bridge portion 22.

For receiving a record carrier 2 the apparatus 1 comprises a movable holder device 29. The holder device 29 is movable between a loading position shown in Fig. 1 and an operating position shown in Figs. 2, 3 and 4. Similarly to the closing device 18 the holder device 29 is substantially U-shaped. The holder device 29 comprises a substantially plate-shaped support 30 for the record carrier 2, which support extends parallel to the cover 26, and two side wall portions 31 and 32, which extend perpendicularly to the support 30. The support 30 has a shallow circular recess 33 adapted to receive the record carrier 2. The support 30 has a central hole 34 through which the turntable 25 can cooperate with the record carrier 2. The support 30 has a curved opening 35 which begins at the hole 34 ad through which an optoelectrical scanning device, not shown, can cooperate with the record carrier 2.

In the apparatus 1 the U-shaped main part 19 of the closing device 18 extends over the U-shaped holder device 29 in such a manner that the bridge portion 22 overlies the support 30 and the two flange portions 20 and 21 are situated at the outer sides of the two side wall portions 31 and 32 of the holder device 29, the bridge portion 22 and the support 30 extending parallel to one another and the two side wall portions 31 and 32 and the two flange portions 20 and 21 also extending parallel to one another. The holder device 29 is connected to the closing device 18 *via* a guiding device 36, which guides the holder device 29 and the closing device 18 in such a way that they are slidable relative to one another in a direction of movement parallel to the cover 26 and the support 30. The direction of movement dictated by the guiding device 36 is indicated by a double arrow 37 in Figs. 1 to 4. The guiding device 36 comprises two guide members 38 and 39, which project laterally from the support 30, and two guide slots 40 and 41 in the flange portions 20 and 21, which slots are engaged by the two guide members 38 and 39.

The apparatus 1 further comprises two actuating devices 42 and 43 which are movably connected to the chassis 7 and which act upon both the closing device 18 and the holder device 29. The two actuating devices 42 and 43 control the closing device 18 and the holder device 29 during a movement of these two devices 18 and 29 in order to obtain a movement of these devices relative to one another parallel to the direction of movement 37. Depending on which of the two possible oppositely directed movements of these two devices 18 and 29 is performed the two actuating devices 42 and 43 produce one of the two possible oppositely directed movements of the two devices 18 and 29 relative to one another. The relative movements produced by the two actuating devices 42 and 43 are defined in such a manner that in the open position of the closing device 18 the holder device 29 occupies its loading position and the record carrier 2 can be placed into the holder device 29, and that in the closed position of the closing device 18 the holder device 29 occupies its operating position and the record carrier 2 is in an operating position which is shown in Fig. 2 and in which the record carrier 2 is pressed against the turntable 25 by means of the pressure device 24. The two actuating devices 42 and 43 will be described in detail hereinafter.

In the apparatus 1 a further guiding device 44 is arranged between the chassis 7 and the holder device 29. The further guiding device 44 comprises two of the guide pins 45, 46 and 47, 48, which project laterally from the two side wall portions 31 and 32 of the holder device 29 and which are spaced apart in the direction of movement defined by the guiding device 36 provided between the closing device 18 and the holder device 29, each of said guide pins engaging one of the substantially L-shaped guide slots 49, 50 and 51, 52 respectively formed in the side walls 10 and 11 of the chassis 7, which walls extend parallel to the two side wall portions 31 and 32 of the holder device 29. At the location adjacent the two side wall portions 31 and 32 of the chassis 7 the guide pins 45, 46, 47 and 48 have portions 53, 54, 55 and 56 which are thicker than their free ends which engage the guide slots 49, 50, 51 and 52. These thicker portions 53, 54, 55 and 56 serve as spacers to define the lateral position of the holder device 29 between the two side walls 10 and 11 of the chassis 7. By means of the further guiding device 44 the holder device 29 is guided along a substantially L-shaped path of movement 57, which comprises a first path section 58, which extends parallel to the direction of movement 37 defined by the guiding device 36 arranged between the closing device 18 and the holder device 29, and a second path section 59, which extends substantially perpendicularly to the cover 26, the first path section 58 and the second path section 59 being interconnected by an arcuate path section 60.

In order to move the holder device 29, which is guided to be movable along the substantially L-shaped path of movement 57 by means of the further guiding device 44, each of the two side wall portions 31 and 32 of the holder device 29 has a substantially L-shaped peripheral toothed section 61 and 62. The L-shape of the toothed sections 61 and 62 is adapted to the L-shape of the guide slots 49, 50, 51 and 52 in the further guiding device 44. The two peripheral toothed sections 61 and 62 each have a toothed portion 63 and 64 respectively parallel to the first path section 58 and a toothed portion 65 and 66 respectively parallel to the second path section 59. The toothed portions 63 and 65 and the toothed portions 64 and 66 are connected by arcuate toothed portions bearing no reference numerals.

The two peripheral toothed sections 61 and 62 are each in mesh with a toothed drive wheel 67 and 68 respectively of a drive system 69 for the holder device 29, which system is wholly arranged on the chassis 7 in the apparatus 1. The two toothed drive wheels 67 and 68 are rotationally locked on a shaft 70 which is rotatably supported on the chassis 7, so that the two toothed drive wheels 67 and 68 are rotationally interlocked *via* the shaft 70 and thus rotate synchronously. The toothed drive wheel 67 is situated with a small clearance in a bore 71 in the first side wall 10 of the chassis 7, so that the bore 71 at the same time serves for rotatably supporting the toothed drive wheel 67 and hence the shaft 70. At its other end the shaft 70 traverses a further bore 72 in the second side wall 11 of the chassis 7, the shaft being rotatably supported by means of this bore 72.

At the end of the shaft 70 where the toothed drive wheel 67 is connected to the shaft 70 an intermediate toothed wheel 73 of the drive system 69 is also rotationally locked on the shaft 70. The intermediate toothed wheel 73 is in mesh with a pinion 74 which is rotatably mounted on a trunnion 75 which projects laterally from the first side wall 10 of the chassis 7. A pulley 76 of the drive system 69 is integral with the pinion 74. By means of a belt 77 the pulley 76 is coupled to a further pulley 78. The further pulley 78 is mounted on the drive shaft 79 of a reversible motor 80 secured in a sleeve-shaped motor support 81 which is integral with the first side wall 10 of the chassis 7. The motor 80 can drive the toothed drive wheels 67 and 68 synchronously *via* the drive system 69 described above and can thus move the holder device 29 along the path of movement 57 defined by the further guiding device 44.

An additional actuating device 82 or 83 cooperates with each of the two guide pins 45 and 47 which are remote from the second toothed portions 65 and 66 of the two peripheral toothed sections 61 and 62. By means of the two additional actuating devices 82 and 83 the relevant guide pins 45 and 47 are movable parallel to the second path section 59. Each of the two additional actuating devices 82 and 83 comprises a control disc 84 and 85 mounted on the shaft 70 carrying the two toothed drive wheels 67 and 68. In the apparatus 1 the control disc 84 is connected to the toothed drive wheel 73 in a manner not shown. At the location of its radial surface 86 or 87 each of the two control discs 84 and 85 has an endless control groove 88 and 89 respectively. Moreover, each of the additional actuating devices 88 and 89 comprises an actuating lever 90 and 91 respectively which is pivotably supported on the chassis 7, *i.e.* on the two side walls 10 and 11 of the chassis 7. The two actuating levers 90 and 91 are pivotably supported on two pivots 90 and 91 which project laterally from the side walls 10 and 11 of the chassis 7. In their initial positions shown on the Figures the two actuating levers 90 and 91 abut against two stop pints 94 and 95 which project laterally from the side walls 10 and 11 of the chassis 7. At their ends which extend into the areas of the control discs 84 and 85 the two actuating levers 90 and 91 each comprise a laterally projecting control pin 96 and 97 respectively. The control pins 96 and 97 engage the control grooves 88 and 89 of the control discs 84 and 85. At their other ends, which extend into the areas of the guide pins 45 and 47 which are remote from the second toothed portions 65 and 66, the two actuating levers 90 and 91 each have a coupling slot 98 and 99 respectively, which slot extends substantially transversely of the second path section 59 and which cooperates with the relevant guide pin 45 or 47 in order to move this pin in that the relevant guide pin 45 or 47 engages the respective coupling slot 98 or 99. As can be seen in Figs. 1 and 2, the coupling slots 98 and 99 are open at the side facing the second toothed portions 65 and 66 of the peripheral toothed sections 61 and 62. As can also be seen in Fig. 1, the guide pins 45 and 47 which cooperate with the coupling slots 98 and 99 are disengaged from the coupling slots 98 and 99 when the holder device 29 is moved along the first path section 58 of the L-shaped path of movement 57.

As stated hereinbefore, the apparatus 1 comprises two actuating devices 42 and 43 which are each movably connected to the chassis 7 and which each act upon the closing device 18 and on the holder device 29 to obtain a relative movement of these devices 18 and 29 in a direction parallel to the direction of movement 37. Each of these two actuating devices 42 and 43 comprises a sliding member 100 and 101 respectively which is guided on the chassis 7 so as to be movable parallel to the second path section 59 of the path of movement 57. For this purpose each of the two side walls 10 and 11 of the chassis 7 has a rectangular aperture 102 and 103 respectively in which the substantially cuboidal sliding member 100, 101 slidably engages, the sliding member 100, 101 being movably retained on the relevant side wall 10 or 11 of the chassis by means of two laterally projecting ribs 104, 105 and 106, 107 respectively and by means of two resilient hooks 108, 109 and 110, 111 projecting from the sliding members 100 and 101 respectively. In order to mount the two sliding members 100 and 101 they are simply passed through the windows 102 and 103 with their resilient hooks 108, 109 and 110, 111 until the hooks engage behind the side walls 10 and 11 of the chassis 7. Each of the two actuating devices 42 and 43 further comprises a toothed wheel 112 and 113 respectively which is rotatably supported on the respective sliding member 100 or 101 by means of a spindle 114, 115 which is integral with the respective sliding member 100 or 101. The free end of each of the two spindles 114 and 115 engages a guide slot 116 or 117 in the side wall portion 31 or 32 of the holder device 29, so that the spindles 114 and 114 are supported in a stable manner and, consequently, the toothed wheels 112 and 113 are supported reliably. Each of the two toothed wheels 112, 113 is in mesh with a respective toothed portion 118, 119 provided on the holder device 29 and extending parallel to the first path section 58 and with a respective toothed portion 120, 121 provided on the closing device 18 and extending parallel to the first path section 58. The toothed portions 118 and 119 are formed on ribs 122 and 123 which project laterally from the side wall portions 31 and 32 of the holder device 29. The toothed portions 120 and 121 are formed directly on the peripheries of the flange portions 20 and 21 of the main part 19 of the closing device 18, which flange portions extend parallel to the first path section 58.

As can be seen in Fig. 1, the present apparatus requires only a small clearance above the upper wall 4 of the apparatus in order to enable the closing device 18 to be moved to its open position and the holder device 29 to be moved to its loading position. When the closing device 18 is in its open position the holder device 29 at the same time occupies its loading position. As is illustrated in Fig. 1, nearly the entire holder device 29 is freely accessible for the insertion of a record carrier 2, which is advantageous for a simple and convenient loading, thereby substantially precluding the likelihood of damaging of the record carrier 2 when it is loaded into the holder device 29. In order to move the record carrier 2 into its operating position in the apparatus 1 after the record carrier 2 has been inserted into the holder device 29 in the loading position thereof the motor 80 is started in a manner not shown, such that the motor 80 drives the shaft 70 clockwise *via* the drive system 69. As a result of this, the holder device 29 is first moved along the first path section 58 *via* the toothed drive wheels 67 and 68 and the toothed portions 61 and 62. This movement also causes the two toothed portions 118 and 119 on the holder device 29 to be moved, the two toothed portions 118 and 119 driving the two toothed wheels 112 and 113 of the two actuating devices 42 and 43 and, *via* these two toothed wheels 112 and 113, the toothed portions 120 and 121 on the closing device 18. As a result, the closing device 18 is also moved parallel to the first path section 58, but owing to the action of the toothed wheels 112 and 113 the closing device 18 is moved in a direction opposite to the movement of the holder device 29. During this actuation of the two devices 18 and 29 they are guided by the guiding device 36 so as be movable relative to one another. During the movement of the holder device 29 and the closing device 18 parallel to the first path section 58 the two actuating levers 90 and 91 are pivoted out of their initial position shown in Fig. 1 *via* the control discs 84 and 85 into such a pivoted position, which is not shown for simplicity, that the coupling slots 98 and 99 are situated at the same level as the those portions of the L-shaped guide slots 49 and 51 which extend parallel to the first path of movement 58. As driving of the toothed drive wheels 67 and 68 continues and the resulting movement of the holder device 29 proceedsthe guide pins 45 and 47, which project laterally from the holder device 29, engage the coupling slots 98 and 99 of the actuating levers 90 and 91, which are in their pivoted positions. As the movement of the holder device 29 proceeds this device is moved along the arcuate path of movement 60, the closing device 18 then being situated almost completely above the holder device 29 as result of the action of the two actuating devices 42 and 43. During the further movement of the holder device 29 parallel to the second path section 59 the holder device 29 is driven both *via* the two toothed drive wheels 67 and 68 and *via* the coupling slots 98 and 99 of the two actuating levers 90 and 91. This results in a very reliable and smooth movement of the holder device and, in addition, it is ensured that the holder device 29 together with the closing device 18, which is movably guided on this holder device, is always moved exactly in the direction of the second path section 59 and that no canting or the like is possible. During the movement of the holder device 29 and the closing device 18 parallel to the second path section 59 there is no longer any relative movement between these two devices 18 and 29 because the sliding members 100 and 101 are also moved exactly parallel to the second path section 59 inside the apertures 102 and 103 and the toothed wheels 112 and 113 supported on the sliding members 100 and 101 are stationary. As soon as the holder device 29 has reached its operating position, in which the record carrier 2 is in its operating position shown in Fig. 2, the motor 80 is stopped in a manner not shown.

In order to remove the record carrier from the apparatus 1 the motor is driven in a direction of rotation opposite to that in the process described above, the shaft 70 being driven clockwise by the motor 80 *via* the drive system 69. By means of the toothed drive wheels 67 and 68, the actuating levers 90 and 91 and the additional actuating devices 82 and 83 the holder device 29 is first lifted exactly in the direction of the second path section 59, without any relative movements being effected between the toothed portions 118 and 119, the toothed wheels 112 and 113 and the toothed portions 120 and 121 so that the closing device 18 is also lifted parallel to the second path section 59. It is not until a movement component in the direction of the first path section occurs during the movement of the holder device 29 that a relative movement is produced between the holder device 29 and the closing device 18 *via* the two actuating devices 42 and 43, as a result of which these two devices 18 and 29 perform mutually opposed movements, so that after the holder device 29 has wholly resumed its loading position the closing device 18 almost completely exposes the holder device 29, thereby guaranteeing an unobstructed and simple removal of the record carrier 2 from the holder device 29.

The embodiment described in the foregoing concerns an apparatus for the reproduction of recordings made on a round disc-shaped record carrier. Obviously, the invention is not limited to such apparatuses but can also be used advantageously in apparatuses constructed for the reproduction of recordings made on a magnetic tape accommodated in a cassette. The invention can be utilised not only in plain reproducing apparatuses but also in apparatuses suitable reproducing as well as recording.

**Claims**

1. An apparatus for the reproduction of recordings made on a record carrier, which apparatus comprises a housing having an upper wall and an opening in the upper wall, through which opening the record carrier can be inserted into the apparatus and removed from the apparatus, a chassis accommodated in the housing, a closing device which is movable between an open position and a closed position and which comprises a cover for closing the opening, a holder device which is movable between a loading position and an operating position and which comprises a support for the record carrier, which support extends parallel to the cover, which holder device is connected to the closing device *via* a guiding device which guides the holder device and the closing device so as to be movable relative to one another in a direction of movement parallel to the cover and the support, and at least one actuating device which is movably connected to the chassis and which acts both upon the closing device and upon the holder device to control the closing device and the holder device during a movement of said two devices so as to obtain a relative movement of said devices with respect to one another parallel to the direction of movement, said control by the control device on the one hand simultaneously causing the closing device to assume its open position and the holder device to assume its loading position, enabling the record carrier to be inserted into the holder device, and on the other hand simultaneously causing the closing device to assume its closed position and the holder device to assume its operating position in which the record carrier is in an operating position, characterised in that between the chassis and the holder device there is provided a further guiding device by which the holder device is guided along a substantially L-shaped path of movement comprising a first path section, which extends substantially parallel to the cover and substantially parallel to the direction of movement defined by the guiding device arranged between the closing device and the holder device, and a second path section, which extends substantially perpendicularly to said direction of movement and substantially perpendicularly to the cover, and in that the actuating device comprises a sliding member which is guided on the chassis so as to be movable parallel to the second path section and a toothed wheel which is rotatably supported on the sliding member and which is in mesh with a toothed portion provided on the holder device and extending parallel to the first path section and with a toothed portion provided on the closing device and extending parallel to the first path section.

2. An apparatus as claimed in Claim 1, characterised in that the holder device comprises two side wall portions which extend perpendicularly to its support and which each have a substantially L-shaped peripheral toothed section comprising a first toothed portion parallel to the first path section and a second toothed portion parallel to the second path section and being in mesh with a toothed drive wheel of a drive system for the holder device, which drive system is arranged at least partly on the chassis, the two toothed drive wheels being rotationally interlocked *via* a shaft which is rotatably supported on the chassis, and in that the further guiding device comprises two guide pins which project laterally from the two side wall portions of the holder device and which are spaced apart in the direction of movement defined by the guiding device provided between the closing device and the holder device, each of said guide pins engaging a substantially L-shaped guide slot formed in a chassis part which extend parallel to the two side wall portions of the holder device, and in that an additional actuating device cooperates with each of the two guide pins which are remote from the second toothed portions, by means of which additional actuating device the relevant guide pin is movable parallel to the second path section.

3. An apparatus as claimed in Claim 2, characterised in that each additional actuating device comprises a control disc, which disc is mounted on the shaft carrying the two toothed drive wheels and has an endless control groove at the location of its radial surface, and an actuating lever which is pivotally supported on the chassis and at an end which extends into the area of the control disc comprises a laterally projecting control pin engaging the control groove of the control disc and at an end which extends into the area of the guide pin which is remote from the second toothed portion has a coupling slot which extends substantially transversely of the second path section and cooperates with the guide pin in order to move.

4. An apparatus as claimed in Claim 3, characterised in that the coupling slot is open at the side facing the second toothed portion, and in that the guide pins which cooperates with the coupling slot is disengaged from the coupling slot when the holder device is moved along the first path section of the L-shaped path of movement.

FIG.1

EP 0 514 965 A2

FIG.2

FIG.3

FIG.4